# EUROPEAN PATENT APPLICATION

(11) **EP 4 239 507 A1**
(43) Date of publication of application: **06.09.2023**
(21) Application number: 22211188.2
(22) Date of filing: 02.12.2022
(51) Int. Cl.: G06F 21/57, G06F 21/44

(54) **OFFLINE SELF CONTENT MANAGEMENT INFOTAINMENT SYSTEM**

(30) Priority: 01.03.2022 US 202217684048
(71) Applicant: OTIS Elevator Company, Farmington, CT 06032 (US)
(72) Inventor: GIREDDY, Jayapal Reddy, Hyderabad, Telangana 500081 (IN); YERRAMSETTY, Raghavendra Rao Veera, Hyderabad, Telangana 500081 (IN); LAKKIMSETTI, Bhramaramba, Hyderabad, Telangana 500081 (IN); KORIVIPADU, Ajith, Hyderabad, Telangana 500081 (IN); AKKINA, Vinod, Hyderabad, Telangana 500081 (IN); KANKANALA, Swapna, Hyderabad, Telangana 500081 (IN); KALIDINDI, Promodh Kuman Varma, Hyderabad, Telangana 500081 (IN)
(74) Representative: Dehns

(57) **Abstract**

A method of operating an infotainment system including: transmitting a public key request for the infotainment system, the public key request including a hardware identification number that identifies the infotainment system; receiving a public key for the infotainment system; saving the public key and content or firmware for the infotainment system onto a mobile storage medium; and transferring the public key and the content or the firmware from the mobile storage medium to the infotainment system.

## Description

### BACKGROUND

The subject matter disclosed herein relates generally to the infotainment systems , and specifically to a method and apparatus for controlling operation of an infotainment system.

Infotainment systems may be located in remote areas with little to no access to the internet which makes adjusting operations of the infotainment system difficult.

### BRIEF SUMMARY

According to an embodiment, a method of operating an infotainment system is provided. The method including: transmitting a public key request for the infotainment system, the public key request including a hardware identification number that identifies the infotainment system; receiving a public key for the infotainment system; saving the public key and content or firmware for the infotainment system onto a mobile storage medium; and transferring the public key and the content or the firmware from the mobile storage medium to the infotainment system.

In addition to one or more of the features described herein, or as an alternative, further embodiments may include playing the content on the infotainment system.

In addition to one or more of the features described herein, or as an alternative, further embodiments may include plugging the mobile storage medium into the infotainment system to transfer the public key and the content or the firmware from the mobile storage medium to the infotainment system.

In addition to one or more of the features described herein, or as an alternative, further embodiments may include plugging the mobile storage medium into a computing device to save the public key and the content or the firmware for the infotainment system onto the mobile storage medium.

In addition to one or more of the features described herein, or as an alternative, further embodiments may include wirelessly transferring the public key and the content or the firmware from the mobile storage medium to the infotainment system.

In addition to one or more of the features described herein, or as an alternative, further embodiments may include wirelessly transferring the public key and the content or the firmware from a computing device to the mobile storage medium.

In addition to one or more of the features described herein, or as an alternative, further embodiments may include that playing the content on the infotainment system for includes: displaying the content on a display device of the infotainment system.

In addition to one or more of the features described herein, or as an alternative, further embodiments may include that playing the content on the infotainment system for includes: emitting the content from a speaker of the infotainment system.

In addition to one or more of the features described herein, or as an alternative, further embodiments may include that the mobile storage medium is a universal serial bus flash drive.

In addition to one or more of the features described herein, or as an alternative, further embodiments may include installing the firmware on the infotainment system.

In addition to one or more of the features described herein, or as an alternative, further embodiments may include that the infotainment system is for an elevator system.

In addition to one or more of the features described herein, or as an alternative, further embodiments may include that the infotainment system is located in an elevator car.

According to another embodiment, an infotainment control system for controlling an infotainment system is provided. The infotainment control system including: an infotainment service cloud database configured to store a public key for the infotainment system; a computer application installed on or operated through a computing device, the computer application configured to transmit a public key request for the infotainment system, the public key request including a hardware identification number that identifies the infotainment system, wherein the computer application is configured to receive the public key from the infotainment service cloud database; and a mobile storage medium configured to receive the public key and content or firmware and transfer the public key and the content or the firmware to the infotainment system.

In addition to one or more of the features described herein, or as an alternative, further embodiments may include that the infotainment system is configured to play the content on the infotainment system.

In addition to one or more of the features described herein, or as an alternative, further embodiments may include that the mobile storage medium is configured to plug into the infotainment system to transfer the public key and the content or the firmware from the mobile storage medium to the infotainment system.

In addition to one or more of the features described herein, or as an alternative, further embodiments may include that the mobile storage medium is configured to plug into the computing device to save the public key and the content or the firmware for the infotainment system onto the mobile storage medium.

In addition to one or more of the features described herein, or as an alternative, further embodiments may include that the mobile storage medium is configured to wirelessly transfer the public key and the content or the firmware from the mobile storage medium to the infotainment system.

In addition to one or more of the features described herein, or as an alternative, further embodiments may include that the computing device is configured to wirelessly transfer the public key and the content or the firmware from the computing device to the mobile storage medium.

In addition to one or more of the features described herein, or as an alternative, further embodiments may include that the infotainment system is configured to display the content on a display device of the infotainment system.

In addition to one or more of the features described herein, or as an alternative, further embodiments may include that the infotainment system is configured to emit the content from a speaker of the infotainment system.

Technical effects of embodiments of the present disclosure include downloading firmware and content for an infotainment system to a mobile storage medium and physically bringing that mobile storage medium to the infotainment system for installation.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 illustrates a schematic view of an infotainment control system, in accordance with an embodiment of the disclosure; and
FIG. 3 is a flow chart of a method of operating an infotainment system, in accordance with an embodiment of the disclosure.

### DETAILED DESCRIPTION

Elevator systems may include an infotainment system but may be located in an area with limited to no internet connection. Updating firmware or content on the infotainment system is difficult if there is no internet connection. The embodiments disclosed herein seek to provide method and system for updating the firmware and content on the infotainment system with no internet access.

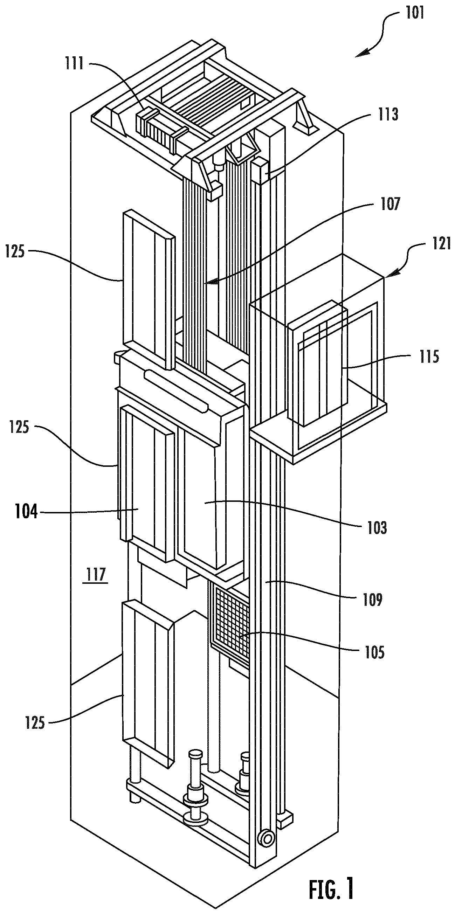

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor or pinched wheel propulsion to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable any public infotainment system or any other conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system.

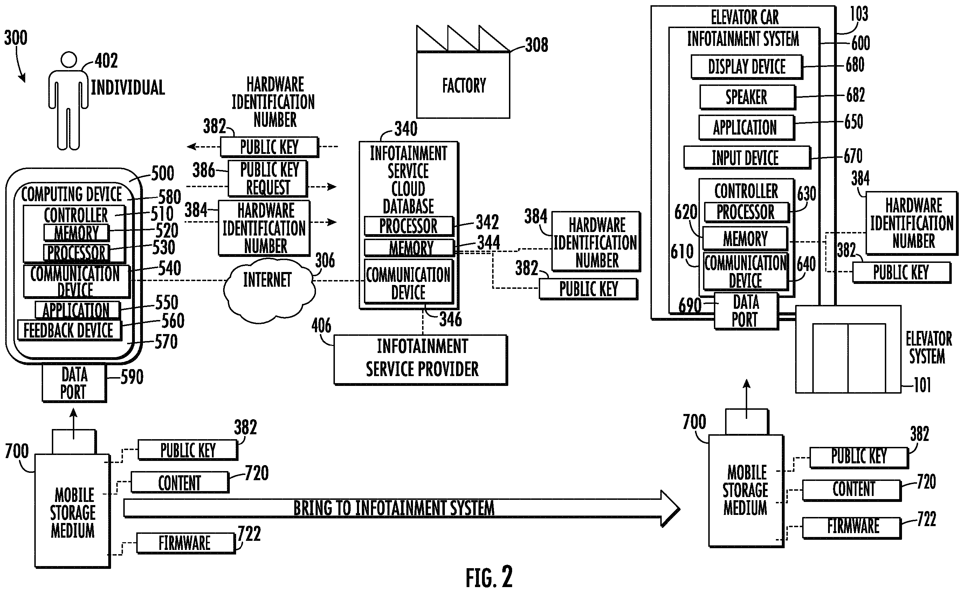

The elevator system 101 also includes one or more elevator doors 104. The elevator door 104 may be integrally attached to the elevator car 103. There may also be an additional elevator door 104 located on a landing 125 of the elevator system 101 (see FIG. 2).

Referring now to FIG. 2, with continued reference to FIG. 1, a schematic diagram of an infotainment control system 300 is illustrated, according to an embodiment of the present disclosure. It should be appreciated that, although particular systems are separately defined in the schematic block diagrams, each or any of the systems may be otherwise combined or separated via hardware and/or software. It is understood that while the embodiments described herein describe an infotainment control system 300 and infotainment system 600 in relation to an elevator system 101, an elevator system 101 is not required and the infotainment system 600 may be a standalone system or embedded in any other system.

The infotainment control system 300 includes the infotainment service cloud database 340, an infotainment system 600, a first computer application 550 installed or accessible on a computing device 500, and a second computer application 650 installed on the infotainment system 600. It is understood that the first computer application 550 and the second computer application 650 may be the same application but just installed on two different devices 500, 600 and/or accessible from the two different devices 500, 600. It is also understood that the first computer application 550 and the second computer application 650 may be two different computer application that are programed to work together. The first computer application 550 may be a mobile application, a website, or software installed directly on the computing device 500. The first computer application 550 may be accessible from the computer device 500 such as, for example, a software-as-as service or a website. The first computer application 550 may be in communication with the infotainment services cloud database 340 via the internet 306. The second computer application 650 may be software installed directly on the infotainment system 600 as the infotainment system may be offline or not connected to the internet 306.

The infotainment system 600 may be located in the elevator car 103. The infotainment system 600 may include a display device 680 and/or a speaker 682 configured to convey content 720 to a passenger of the elevator system 101. The display device 680 may be configured to display content 720 to the passenger in the elevator car 103. The content 720 displayed to the passenger may include, but it is not limited to, images, video, advertisements, instructions, safety announcements, movies, shows, music videos, sports, news, sports scores, scheduled events, stock market info, or any other content 720 that may be pertinent to a passenger of the elevator system. The speaker 682 may be configured to emit similar content 720 to the passenger in the form of audio.

The infotainment system 600 includes a controller 610 configured to control operations of the infotainment system 600. The controller 610 may be an electronic controller including a processor 630 and an associated memory 620 comprising computer-executable instructions (i.e., computer program product) that, when executed by the processor 630, cause the processor 630 to perform various operations. The processor 630 may be, but is not limited to, a single-processor or multiprocessor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 620 may be but is not limited to a random access memory (RAM), read only memory (ROM), or other electronic, optical, magnetic or any other computer readable medium.

The infotainment system 600 may have no connection to the internet 306. The infotainment system 600 includes a communication device 640 configured to communicate through a short-range wireless communication method that may include, but is not limited to, Bluetooth, Bluetooth low energy, Near Field Communication (NFC), Infrared (IR), or any other similar short-range wireless communication method.

The display device 680 may be a computer display, an LCD display, an LED display, an OLED display, a touchscreen of a smart phone, tablet, or any other similar display device known to one of the skill in the art. A user operating the infotainment system 600 may be able to view the second computer application 650 through the display device 680.

The infotainment system 600 may include an input device 670 configured to receive a manual input from a user (e.g., human being) of computing device 600. The input device 670 may be a keyboard, a touch screen, a joystick, a knob, a touchpad, one or more physical buttons, a microphone configured to receive a voice command, a camera or sensor configured to receive a gesture command, an inertial measurement unit configured to detect a shake of the infotainment system 600, or any similar input device known to one of skill in the art. The user operating the infotainment system 600 is able to enter data into the second computer application 650 through the input device 670. The input device 670 allows the user operating the infotainment system 600 to data into the second computer application 650 via a manual input to input device 670. For example, the user may respond to a prompt on the display device 680 by entering a manual input via the input device 670. In one example, the manual input may be a touch on the touchscreen. In an embodiment, the display device 680 and the input device 670 may be combined into a single device, such as, for example, a touchscreen.

The infotainment system 600 device may also include a feedback device 660. The feedback device 660 may activate in response to a manual input via the input device 670. The feedback device 660 may be a haptic feedback vibration device and/or a speaker emitting a sound. The feedback device 660 may activate to confirm that the manual input entered via the input device 670 was received via the second computer application 650. For example, the feedback device 660 may activate by emitting an audible sound through the speaker 682 or vibrate the infotainment system 600 to confirm that the manual input entered via the input device 670 was received via the second computer application 650.

The infotainment system 600 may also include a data port 690 that may be configured to operable connect to, transmit data to, and receive data from a mobile storage medium 700. The data port 690 may be a physical connection port or a wireless communication port. The data port 690 may be a universal serial bus (USB) port, a USB-A port, a USB-B port, a USB-C port, a USB Mini-A port, a USB Mini-B port, a USB Micro-A port, a USB Micro-B port, an SD port, or any other port known to one of skill in the art.

The mobile storage medium 700 may be a tangible storage medium, such as, for example, USB flash drive, a thumb drive, an SD card, or any other type of storage medium known to one of skill in the art. The mobile storage medium 700 may include a communication device 746 capable of communicating wirelessly with infotainment system 600 and the computing device 500 through a short-range wireless communication method that may include, but is not limited to, Bluetooth, Bluetooth low energy, Near Field Communication (NFC), Infrared (IR), or any other similar short-range wireless communication method.

The infotainment service cloud database 340 may be a database to control and coordinate access to the infotainment system 600. The infotainment service cloud database 340 may belong to and/or be managed by an infotainment service provider 406, such as, for example a manufacture of the elevator system 101, a thirdparty infotainment service provider, or any service provider. The infotainment service provider 406 may be a person, an organization, a group, a partnership, a company, or a corporation.

The infotainment service cloud database 340 may be a remote computer server that includes a processor 342 and an associated memory 344 comprising computer-executable instructions (i.e., computer program product) that, when executed by the processor 342, cause the processor 342 to perform various operations. The processor 342 may be, but is not limited to, a single-processor or multiprocessor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 344 may be but is not limited to a random access memory (RAM), read only memory (ROM), or other electronic, optical, magnetic or any other computer readable medium.

The infotainment service cloud database 340 also includes a communication device 346. The communication device 346 may be capable of communication with the internet 306. The communication device 346 may be configured to communicate with the computing device 500 through the internet 306. The communication device 346 may be a software module that handles communications to and from the first computer application 550.

The computing device 500 may belong to or be in possession of an individual 402 that manages or operates the elevator system 101. The computing device 500 may be a desktop computer, a laptop computer, or a mobile computing device that is typically carried by a person, such as, for example a phone, a smart phone, a PDA, a smart watch, a tablet, a laptop, or any other mobile computing device known to one of skill in the art.

The computing device 500 includes a controller 510 configured to control operations of the computing device 500. The controller 510 may be an electronic controller including a processor 530 and an associated memory 520 comprising computer-executable instructions (i.e., computer program product) that, when executed by the processor 530, cause the processor 530 to perform various operations. The processor 530 may be, but is not limited to, a single-processor or multiprocessor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 520 may be but is not limited to a random access memory (RAM), read only memory (ROM), or other electronic, optical, magnetic or any other computer readable medium.

The computing device 500 includes a communication device 540 configured to communicate with the internet 306 through one or more wireless signals. The one or more wireless signals may include Wi-Fi, Bluetooth, Zigbee, Sub-GHz RF Channel, cellular, satellite, or any other wireless signal known to one of skill in the art. Alternatively, the computing device 500 may be connected to the internet 306 through a hardwired connection. The computing device 500 is configured to communicate with the infotainment service cloud database 340 through the internet 306.

The computing device 500 may include a display device 580, such as for example a computer display, an LCD display, an LED display, an OLED display, a touchscreen of a smart phone, tablet, or any other similar display device known to one of the skill in the art. An individual 402 operating the computing device 500 is able to view the first computer application 550 through the display device 580.

The computing device 500 includes an input device 570 configured to receive a manual input from a user (e.g., human being) of computing device 500. The input device 570 may be a keyboard, a touch screen, a joystick, a knob, a touchpad, one or more physical buttons, a microphone configured to receive a voice command, a camera or sensor configured to receive a gesture command, an inertial measurement unit configured to detect a shake of the computing device 500, or any similar input device known to one of skill in the art. The user operating the computing device 500 is able to enter data into the first computer application 550 through the input device 570. The input device 570 allows the user operating the computing device 500 to data into the first computer application 550 via a manual input to input device 570. For example, the user may respond to a prompt on the display device 580 by entering a manual input via the input device 570. In one example, the manual input may be a touch on the touchscreen. In an embodiment, the display device 580 and the input device 570 may be combined into a single device, such as, for example, a touchscreen.

The computing device 500 device may also include a feedback device 560. The feedback device 560 may activate in response to a manual input via the input device 570. The feedback device 560 may be a haptic feedback vibration device and/or a speaker emitting a sound. The feedback device 560 may activate to confirm that the manual input entered via the input device 570 was received via the first computer application 550. For example, the feedback device 560 may activate by emitting an audible sound or vibrate the computing device 500 to confirm that the manual input entered via the input device 570 was received via the first computer application 550.

The computing device 500 may also include a data port 590 that may be configured to operable connect to, transmit data to, and receive data from a mobile storage medium 700. The data port 590 may be a physical connection port or a wireless communication port. The data port 590 may be a USB port, a USB-A port, a USB-B port, a USB-C port, a USB Mini-A port, a USB Mini-B port, a USB Micro-A port, a USB Micro-B port, an SD port, or any other port known to one of skill in the art.

The infotainment system 600 is assigned a hardware identification number 384 when it is first manufactured at the factory 308. The hardware identification number 384 may be a serial number to identify each individual infotainment system 600 that has been manufactured. The hardware identification number 384 may be physically attached to the infotainment system 600 on an identification tag. The hardware identification number 384 may also be stored in the memory 640 of the infotainment system 600 where an individual 402 may look it up through the application 650.

The infotainment system 600 is also assigned a public key 382 when it is first manufactured at the factory 308. The public key 382 may be a randomly generated number that acts as a credential or password that will allow an individual 402 to control operation of the infotainment system 600 or gain access to the infotainment system 600 if they know the public key 382. The public key 382 also be stored in the memory 640 of the infotainment system 600 but may be inaccessible to an individual 402 through the application 650.

The hardware identification number 384 and the associated public key 382 for the infotainment system 600 are stored in the memory 344 of the cloud database 340.

The individual 402 may desire to adjust the content 720 being displayed or emitted by the infotainment system 600. In order to adjust the content 720, the individual 402 may transmit a public key request 386 to the infotainment service cloud database 340 through the internet 306 utilizing the first computer application 550. The public key request 386 would include the hardware identification number 384. The hardware identification number 384 may be required so that the infotainment service cloud database 340 knows what public key 382 to send back.

The infotainment service cloud database 340 is configured to transmit the public key 382 back to the application 550 of the computing device 500 through the internet 306. The individual 402 may prepare the content 720 they desire the infotainment system 600 to display or emit on the computing device 500. The individual 402 may prepare the content 720 using the first computer application 550 or any other computer program.

Once the content 720 is ready then the content 720 may be saved to a mobile storage medium 700 along with the public key 382 using the application 550. The mobile storage medium 700 may be physically plugged into the data port 590 of the computing device 500 to obtain the content 720 and the public key 382. Alternatively, the mobile storage medium 700 may be physically brought into close proximity of the computing device 500 and the content 720 and the public key 382 may be wirelessly transferred to the mobile storage medium 700.

The mobile storage medium 700 is then physically brought to the infotainment system 600 and plugged into the data port 690 of the infotainment system 600. The infotainment system 600 will confirm that the public key 382 is correct and then allow the content 720 into the infotainment system 600. The content 720 may then be displayed or emitted from the infotainment system 600.

Alternatively, the mobile storage medium 700 may be physically brought into close proximity of the infotainment system 600. The infotainment system 600 will confirm that the public key 720 is correct and then allow the content 720 to wirelessly transfer to the infotainment system 600. The content 720 may then be played on the infotainment system 600.

Additionally, the infotainment system 600 may require a firmware 722 update. The infotainment service cloud database 340 is configured to transmit the public key 382 and firmware 722 back to the application 550 of the computing device 500 through the internet 306. This may occur after a public key request 386 or it may be a periodic push of firmware 722.

The firmware 722 may be saved to a mobile storage medium 700 along with the public key 382 using the application 550. The mobile storage medium 700 may be physically plugged into the data port 590 of the computing device 500 to obtain the firmware 722 and the public key 382. Alternatively, the mobile storage medium 700 may be physically brought into close proximity of the computing device 500 and the firmware 722 and the public key 382 may be wirelessly transferred to the mobile storage medium 700.

The mobile storage medium 700 is then physically brought to the infotainment system 600 and plugged into the data port 690 of the infotainment system 600. The infotainment system 600 will confirm that the public key 720 is correct and then allow the firmware 722 into the infotainment system 600. The firmware 722 is then installed the infotainment system 600.

Alternatively, the mobile storage medium 700 may be physically brought into close proximity of the infotainment system 600. The infotainment system 600 will confirm that the public key 720 is correct and then allow the firmware 722 to wirelessly transfer to the infotainment system 600. The firmware 722 is then installed the infotainment system 600.

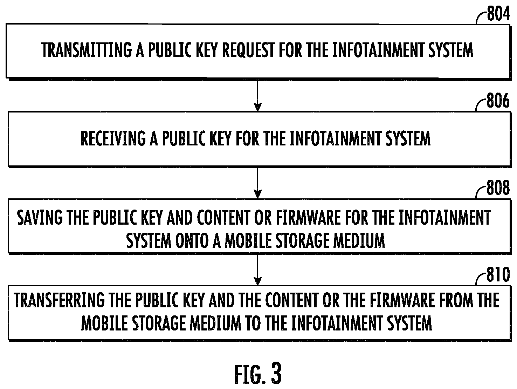

Referring now to FIG. 3, with continued reference to FIGS 1-4, a flow chart of a method 800 of operating an infotainment system 600 is illustrated, in accordance with an embodiment of the disclosure. In an embodiment, the method 800 is performed by the infotainment control system 300. In an embodiment, the infotainment system 600 is for an elevator system 101. In an embodiment, the infotainment system 60 is located in an elevator car 103.

At block 804, a public key request 386 for the infotainment system 600 is transmitted. The public key request 386 including a hardware identification number 384 that identifies the infotainment system 600. The public key request 386 may be transmitted by the first computer application 550 to infotainment cloud database 340 through the internet 306.

At block 806, a public key 382 for the infotainment system 600 is received. The public key 382 may be transmitted by the infotainment cloud database 340 to the first computer application 550 through the internet 306.

At block 808, the public key 382 and content 720 or firmware 722 for the infotainment system 600 is saved onto a mobile storage medium 700. The mobile storage medium 700 may be plugged into a computing device 500 to save the public key 382 and the content 720 or the firmware 722 for the infotainment system 600 onto the mobile storage medium 700. In an embodiment, the mobile storage medium 700 is a USB flash drive 700. Alternatively, the computing device 700 may wirelessly transfer the public key 382 and the content 720 or the firmware 722 from the computing device 700 to the mobile storage medium 700. Once the public key 382 and the content 720 or the firmware 722 is saved on the mobile storage medium 700, the mobile storage medium 700 may be physically carried to the infotainment system 600.

At block 810, the public key 382 and the content 720 or firmware 722 is transferred from the mobile storage medium 700 to the infotainment system 600. The mobile storage medium 700 may need to be plugged into the infotainment system 600 to transfer the public key 382 and the content 720 or the firmware 722 from the mobile storage medium 700 to the infotainment system 600. Alternatively, the mobile storage medium 700 may wirelessly transfer the public key 382 and the content 720 or the firmware 722 from the mobile storage medium 700 to the infotainment system 600.

The method 800 may further include that the content 720 is played on the infotainment system 600. The content 720 may be displayed on a display device 680 of the infotainment system 600. The content 720 may be emitted from a speaker 682 of the infotainment system 600. The method 800 may further include that the firmware 722 is installed on the infotainment system 600.

While the above description has described the flow process of FIG. 3 in a particular order, it should be appreciated that unless otherwise specifically required in the attached claims that the ordering of the steps may be varied.

As described above, embodiments can be in the form of processorimplemented processes and devices for practicing those processes, such as processor. Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method of operating an infotainment system, the method comprising:
transmitting a public key request for the infotainment system, the public key request including a hardware identification number that identifies the infotainment system;
receiving a public key for the infotainment system;
saving the public key and content or firmware for the infotainment system onto a mobile storage medium; and
transferring the public key and the content or the firmware from the mobile storage medium to the infotainment system.

2. The method of claim 1, further comprising:
playing the content on the infotainment system.

3. The method of claim 2, wherein playing the content on the infotainment system for comprises:
displaying the content on a display device of the infotainment system.

4. The method of claim 2 or 3, wherein playing the content on the infotainment system for comprises:
emitting the content from a speaker of the infotainment system.

5. The method of any preceding claim, further comprising:
plugging the mobile storage medium into the infotainment system to transfer the public key and the content or the firmware from the mobile storage medium to the infotainment system.

6. The method of any preceding claim, further comprising:
plugging the mobile storage medium into a computing device to save the public key and the content or the firmware for the infotainment system onto the mobile storage medium.

7. The method of any preceding claim, further comprising:
wirelessly transferring the public key and the content or the firmware from the mobile storage medium to the infotainment system.

8. The method of any preceding claim, further comprising:
wirelessly transferring the public key and the content or the firmware from a computing device to the mobile storage medium.

9. The method of any preceding claim, wherein the mobile storage medium is a universal serial bus flash drive.

10. The method of any preceding claim, further comprising:
installing the firmware on the infotainment system.

11. The method of any preceding claim, wherein the infotainment system is for an elevator system.

12. The method of any preceding claim, wherein the infotainment system is located in an elevator car.

13. An infotainment control system for controlling an infotainment system, the infotainment control system comprising:
an infotainment service cloud database configured to store a public key for the infotainment system;
a computer application installed on or operated through a computing device, the computer application configured to transmit a public key request for the infotainment system, the public key request including a hardware identification number that identifies the infotainment system, wherein the computer application is configured to receive the public key from the infotainment service cloud database; and
a mobile storage medium configured to receive the public key and content or firmware and transfer the public key and the content or the firmware to the infotainment system.

14. The infotainment control system of claim 13, wherein the infotainment system is configured to play the content on the infotainment system.

15. The infotainment control system of claim 13 or 14, wherein the mobile storage medium is configured to plug into the infotainment system to transfer the public key and the content or the firmware from the mobile storage medium to the infotainment system;
or wherein the mobile storage medium is configured to wirelessly transfer the public key and the content or the firmware from the mobile storage medium to the infotainment system.
